## Europäisches Patentamt

## European Patent Office

## Office européen des brevets

(19)

(11) Veröffentlichungsnummer : **0 101 536**
**B1**

(12)

# EUROPÄISCHE PATENTSCHRIFT

(45) Veröffentlichungstag der Patentschrift :
**11.10.89**

(51) Int. Cl.⁴ : **G 01 P   3/36**, G 01 P 13/04

(21) Anmeldenummer : **83105364.0**

(22) Anmeldetag : **31.05.83**

(54) **Sensor für Relativbewegungen.**

(30) Priorität : **06.08.82 DE 3229343**

(43) Veröffentlichungstag der Anmeldung :
**29.02.84 Patentblatt 84/09**

(45) Bekanntmachung des Hinweises auf die Patenterteilung : **11.10.89 Patentblatt 89/41**

(84) Benannte Vertragsstaaten :
**AT FR GB NL**

(56) Entgegenhaltungen :
EP-A- 0 008 714
DE-A- 2 450 439
DE-A- 2 809 355
US-A- 3 757 128
US-A- 4 218 623
US-A- 4 224 514
US-A- 4 228 396
**ATZ Automobiltechnische Zeitschrift, 1975, Nr. 7/8,
pages 213-218**
**Journal of the Optical Society of America, Vol. 53, Nr.
12, December 1963, pages 1416-1422**
**Die Akte enthält technische Angaben, die nach dem
Eingang der Anmeldung eingereicht wurden und die
nicht in dieser Patentschrift enthalten sind.**

(73) Patentinhaber : **ROBERT BOSCH GMBH
Postfach 50
D-7000 Stuttgart 1 (DE)**

(72) Erfinder : **Hankel, Rainer, Dipl.-Ing.
Marmaraweg 49
D-1000 Berlin 42 (DE)**
Erfinder : **Pham, Minh-Chanh, Dipl.-Ing.
Schöneberger Ufer 53
D-1000 Berlin 30 (DE)**
Erfinder : **Peuser, Sieghart, Ing. grad.
Mörchinger Strasse 40
D-1000 Berlin 37 (DE)**

(74) Vertreter : **Schmidt, Hans-Ekhardt
Robert Bosch GmbH Geschäftsbereich Elektronik
Patent- und Lizenzabteilung Forckenbeckstrasse 9-
13
D-1000 Berlin 33 (DE)**

# EP 0 101 536 B1

## Beschreibung

Die Erfindung geht von einem Sensor nach der Gattung des Anspruchs 1 aus.

## Stand der Technik

Es ist eine derartige Vorrichtung bekannt (US-A-4 218 623), mit der Bewegungen eines optischen Abbildes festgestellt werden können. Die bekannte Vorrichtung enthält eine Reihe von lichtempfindlichen Elementen, die verschiedene Formen und Flächen aufweisen. Die Elemente sind in Gruppen aufgeteilt und in bestimmter Weise miteinander verbunden. Das Ausgangssignal der einzelnen Gruppen wird über einen Strom-Spannungswandler zu einer Modulationsschaltung geführt, in welcher eine Sinusspannung für die Modulation des Ausgangssignals erzeugt wird. Danach werden alle modulierten Signale addiert. Das durch die Addition erhaltene Signal wird über ein Bandpaßfilter an eine Schaltung weitergeleitet, in welcher die Phasendifferenz zwischen dieser Signalspanung und einer an den Ausgängen des Sinusgenerators liegenden Sinusspannung gemessen wird. Tritt eine größer werdende Phasendifferenz auf, so bedeutet dies nur, daß das optische Abbild sich von einer Seite zur anderen Seite des Sensors bewegt. Mit der bekannten Vorrichtung kann auch die Richtung der Bewegung ermittelt werden.

Es ist weiterhin eine Einrichtung zum berührungslosen Messen der Geschwindigkeit bekannt (DE-OS 24 50 439), bei der der von zwei um 90° zueinander versetzten Sensoren erfaßte Teil einer Bezugsfläche auf den Gitterebenen abgebildet wird, deren Struktur als Fotoempfänger ausgebildet ist. Aus den von den Fotoempfängern abgegebenen Frequenzspektren wird je eine bestimmte Mittenfrequenz abgeleitet, die ein Maß für die Geschwindigkeit und die Bewegungsrichtung ist. Die Bestimmung der Bewegungsrichtung ist jedoch nur in dem durch die gegenseitige Lage der beiden Sensoren gegebenen Quadranten des Koordinatensystems möglich. Das Meßergebnis ist somit mehrdeutig, wenn die Geschwindigkeitsvektoren den gleichen Betrag haben, aber in entgegengesetzter Richtung verlaufen, wie zum Beispiel bei einem Kraftfahrzeug, das vorwärts und rückwärts fahren kann.

Die beiden vorstehend erläuterten bekannten Einrichtungen sind nicht für die Erfassung aller relevanten Bewegungen eines Kraftfahrzeuges geeignet.

## Aufgabe der Erfindung

Der Erfindung liegt die Aufgabe zugrunde, einen Sensor für Relativbewegungen von insbesondere Kraftfahrzeugen zu schaffen, mit dem folgende Größen ermittelt werden können :
— die augenblickliche Geschwindigkeit
— der zurückgelegte Weg
— die augenblickliche Fahrtrichtung
— die Vorwärts- bzw. Rückwärtsrichtung des Sensors bzw. des Kraftfahrzeuges.

## Lösung der Aufgabe

Die vorstehend beschriebene Aufgabe wird bei einem Sensor der eingangs genannten Art durch die im jeweiligen Kennzeichen des Anspruchs 1 bzw. 2 offenbarten Maßnahmen gelöst. Die Gitter können als ein monolithisch integriertes Bauteil realisiert werden, so daß, wenn zum Beispiel die Silizium-Planartechnik angewendet wird, eine Sensorfertigung als Serienfertigung bei hoher Präzision möglich ist.

## Zeichnung

Ausführungsbeispiele der Erfindung sind in der Zeichnung dargestellt und in der nachfolgenden Beschreibung näher erläutert. Es zeigen
Fig. 1   eine schematische Darstellung eines bekannten Sensors für Relativbewegungen,
Fig. 2   eine bekannte Fotoempfängerstruktur mit zwei kammförmigen, ineinander verschachtelten Gittern,
Fig. 3   eine erfindungsgemäße Fotoempfängerstruktur von vier kammförmigen, ineinander verschachtelten Gittern,
Fig. 4   eine schematische Darstellung eines Sensors mit zwei Fotoempfängerstrukturen nach Fig. 3 zum Erfassen der Bewegung eines Fahrzeuges, und
Fig. 5   eine Alternative zu der Fotoempfänger-Anordnung gemäß Fig. 4

## Beschreibung der Erfindung

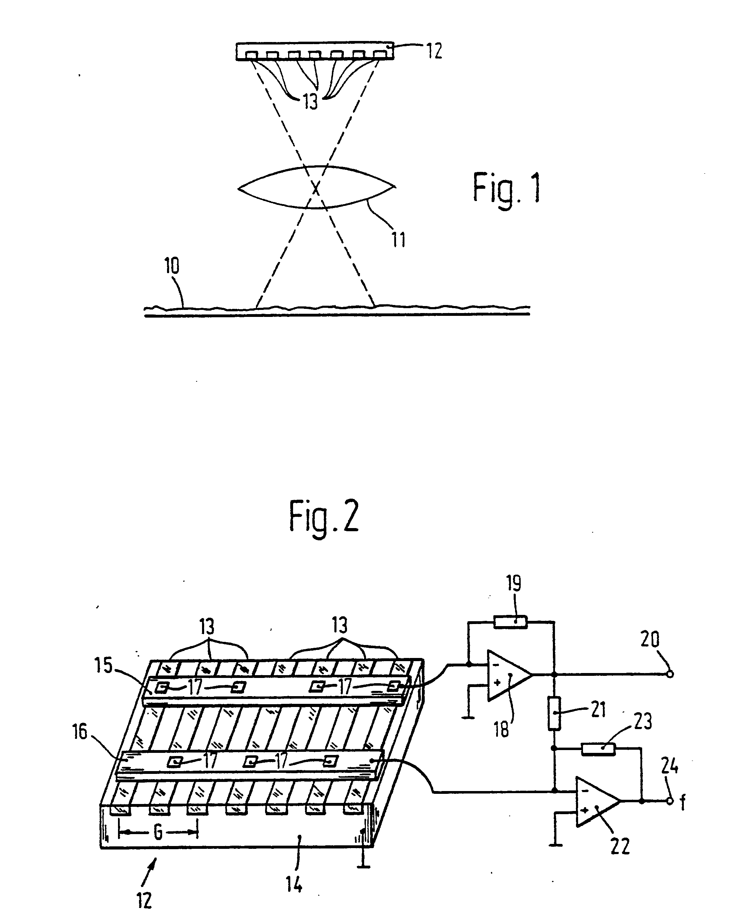

Bei der in Fig. 1 gezeigten prinzipiellen Darstellung eines Sensors für Relativbewegungen wird eine Bezugsfläche 10 über ein optisches System 11, das als optische Linse dargestellt ist, auf einem Gittersystem 12 abgebildet. Die Bezugsfläche muß eine statistische Struktur aufweisen, wie es beispielsweise bei einem Straßenbelag für erdgebundene Fahrzeuge oder bei der Erdoberfläche für ein Flugzeug der Fall ist. In der Gitter- bzw. Bildebene ist die Gitterstruktur 13 durch Fotoempfänger realisiert. Das durch diese gitterartig angeordneten Fotoempfänger erzeugte elektrische Signal weist neben niederfrequenten Änderungen eine Modulation auf, deren Frequenz in einem Zusammenhang mit der Geschwindigkeit der Bezugsfläche 10 relativ zum Sensor nach Fig. 1 steht. Es gilt die Beziehung:

$$f = (m \cdot v)/G, \tag{1}$$

wobei v die relative Geschwindigkeit zwischen Bezugsfläche 10 und Sensor 11, 12 in Metern pro Sekunde, G eine rasterabhängige Gitterkonstante in Metern, m der optische Abbildungsmaßstab, mit dem die Bezugsfläche 10 auf dem Gittersystem 12 abgebildet wird, und f die Frequenz des Geschwindigkeitssignals in 1/s bedeuten. Will man anstelle der Geschwindigkeit v den zurückgelegten Weg s bestimmen, so muß die Anzahl der Perioden des Geschwindigkeitssignals ermittelt werden.

Das Meßprinzip selbst und die Auswertung ist dem Fachmann durch den Stand der Technik hinreichend bekannt.

Bei dem in Fig. 2 dargestellten bekannten monolithisch integrierten Gittersystem 12 ist auf einem Si-Substrat 14 vom ersten Leitungstyp (zum Beispiel n-leitend) eine Gitterstruktur 13 aufgebracht, die aus streifenförmigen Diffusionszonen vom zweiten Leitungstyp (zum Beispiel p-leitend) besteht. Somit bilden sich als Fotodioden geeignete p-n-Übergänge aus. Anstelle von Fotodioden können natürlich grundsätzlich auch Fototransistoren oder andere fotoelektrische Wandler eingesetzt werden. Über zwei streifenförmige Metallisierungen 15, 16 werden die streifenförmigen Diffusionszonen der Gitterstruktur 13 so miteinander verbunden, daß zwei ineinander verschachtelte, kammförmige Fotodiodenstrukturen entstehen, die eine Gitterkonstante G aufweisen, die gleich dem doppelten Abstand benachbarter Diffusionszonen ist. Die elektrische Verbindung der Metallisierungen 15, 16 mit Gitterstruktur 13 ist durch Rechtecke 17 entsprechend den Kontaktfenstern im Oxid beim Silizium-Planarprozeß dargestellt. Da die Fotodioden in dieser Anordnung eine gemeinsame Elektrode — hier das Substrat 14 als Kathode — aufweisen, ist eine Subtraktion der Fotoströme zur Unterdrückung des Gleichlichtanteils durch Antiparallelschaltung nicht möglich. Der Strom der über die Metallisierung 15 verbundenen Dioden wird daher dem invertierenden Eingang eines Verstärkers 18 zugeführt, der über einen Widerstand 19 gegengekoppelt ist. Der nichtinvertierende Eingang des Verstärkers 18 liegt an Masse. Der Ausgang des Verstärkers 18 ist sowohl mit einer ersten Ausgangsklemme 20 als auch über einen Widerstand 21 mit dem invertierenden Eingang eines zweiten Verstärkers 22 verbunden, dem der Strom der über die Metallisierung 16 verbundenen Dioden zugeführt ist. Dieser zweite Verstärker 22 ist über einen Widerstand 23 gegengekoppelt. Der nichtinvertierende Eingang liegt an Masse. Der Ausgang ist mit einer zweiten Ausgangsklemme 24 verbunden.

Die beschriebene, bekannte Anordnung ermöglicht bei gleichzeitigem Kurzschlußbetrieb der Dioden der Gitterstruktur 13 die Subtraktion der Fotoströme. Durch diese Subtraktion wird der Anteil des Gleichlichtes unterdrückt und nur die aus dem Ortsspektrum gefilterte Komponente verstärkt. Der Betrag der Spannung am Ausgang des Verstärkers 18 ist — in Abhängigkeit von dem Widerstand 19 — direkt proportional zum Strom der mit der Metallisierung 15 verbundenen Dioden. Die mit der Metallisierung 16 verbundenen Dioden speisen den Strom in den invertierenden Eingang des Verstärkers 22 ein. Die Gegenkopplung der Verstärker 18, 22 bewirkt, daß die invertierenden Eingänge virtuell auf dem Potential Null gehalten werden. Die Verbindung des Ausgangs des Verstärkers 18 mit dem Eingang des Verstärkers 22 über den Widerstand 21 prägt daher dem Eingang des Verstärkers 22 einen Strom ein, der genau dem negativen Wert des Stroms der mit der Metallisierung 15 verbundenen Dioden entspricht, sofern die Widerstände 19, 21 gleich groß sind. Die Ausgangsspannung an der Klemme 24 ist somit — in Abhängigkeit von dem Widerstand 23 — proportional zur Differenz der Ströme aus den beiden Metallisierungen 15, 16. An der Ausgangsklemme 20 liegt, wie bereits erwähnt, das verstärkte Signal aus den mit der Metallisierung 15 verbundenen Dioden. Dieses Signal enthält noch den Gleichlichtanteil und kann beispielsweise zu Meßzwecken verwendet werden.

Es sei noch erwähnt, daß es beim Messen von Bewegungen erforderlich sein kann, bestimmte Kennungen, zum Beispiel Startinformationen zur Initialisierung des Auswertesystems, zu übermitteln. Werden diese Kennungen als kontrastreiche Muster, zum Beispiel helle Streifen auf dunklem Grund, die die Informationen in geeigneter Kodierung enthalten, auf die Bezugsfläche 10 aufgebracht, ist es beispielsweise mit der Anordnung gemäß Fig. 2 möglich, über das an der Ausgangsklemme 20 des Verstärkers 18 vorliegende Signal die Kennungen zu erfassen und nach entsprechender Signalverformung und Dekodierung in das Auswertesystem einzulesen.

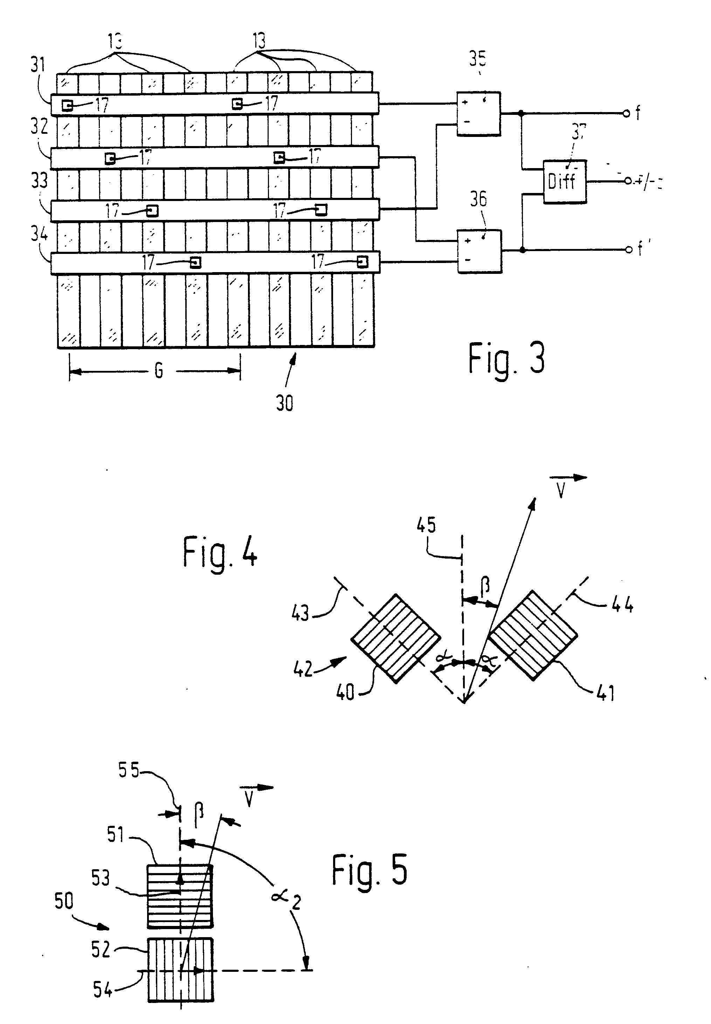

In Fig. 3 ist ein Gittersystem 30 dargestellt, dessen Gitterstruktur 13 aus streifenförmigen Diffusionszonen besteht. Diese Diffusionszonen sind über vier streifenförmige Metallisierungen 31 bis 34 in der Weise miteinander verbunden, daß vier kammförmige, ineinander verschachtelte Gitter entstehen. Dies geschieht dadurch, daß versetzt jede vierte Diffusionszone der Gitterstruktur 13 mit einer Metallisierung verbunden ist. Die Verbindungspunkte sind in Fig. 3 durch Rechtecke 17 symbolisiert. Die Gitterkonstante G entspricht dem Abstand zwischen vier Diffusionszonen. Die Metallisierungen 31 und 33 sind mit einer ersten Subtrahierstufe 35 und die Metallisierungen 32 und 34 mit einer zweiten Subtrahierstufe 36 verbunden, wodurch wie bei dem Ausführungsbeispiel nach Fig. 2 die entsprechenden Fotodiodenströme subtrahiert werden. Dabei können die Subtrahierstufen 35 und 36 entsprechend der Schaltung nach Fig. 2 aufgebaut sein. Die beiden Ausgangsfrequenzen f und f' der Subtrahierstufen 35 und 36 sind zueinander phasenversetzt und werden einer Phasendifferenz-Meßstufe 37 zugeführt. Durch die Phasendifferenz zwischen den Ausgangsfrequenzen f und f' kann festgestellt werden, ob die Bewegung des optischen Abbildes der Bezugsfläche 10 (Fig. 1) von links nach rechts oder von rechts nach links bezüglich des Gittersystems 30 erfolgt ist.

Soll eine zweidimensionale Bewegung eines Landfahrzeuges erfaßt werden, so werden gemäß Fig. 4 zwei Gittersysteme 40, 41, die den gleichen Aufbau wie das Gittersystem 30 nach Fig. 3 haben einschließlich ihrer Stufen 35, 36, 37, derart zu einem Sensor 42 vereinigt, daß ihre Symmetrieachsen 43 und 44 einen Winkel $2\alpha$ einschließen, wobei $\alpha$ der Winkel zwischen einer Symmetrieachse 45 des Sensors 42 und je einer Symmetrieachse 43, 44 der Gittersysteme liegt.

Eine weitere Möglichkeit zur Erfassung des Bewegungsvektors $\vec{V}$ zeigt der Sensor 50 nach Fig. 5. Dazu werden zwei mit ihren Symmetrieachsen 53, 54 um 90° zueinander versetzte Gittersysteme 51, 52 nebeneinander angeordnet. Der Bewegungswinkel $\beta$ ist dabei der Winkel zwischen der Symmetrieachse 55 des Sensors 50 und dem Bewegungsvektor $\vec{V}$, der durch das Zentrum des in der Figur 5 dargestellten unteren Gittersystems 52 führt. Die Ausgangssignale sind vom oberen Gittersystem 51 :

$$f_1 = (m/G)\, v \cdot \cos \beta \qquad \text{und sign } (v \cdot \cos \beta)$$

vom unteren Gittersystem 52 :

$$f_2 = (m/G)\, v \cdot \sin \beta \qquad \text{und sign } (v \cdot \sin \beta).$$

Durch Auflösen der Gleichungen lassen sich wiederum die erforderlichen Größen zur eindeutigen Festlegung der zweidimensionalen Bewegung errechnen.

## Patentansprüche

1. Sensor für Relativbewegungen zu einer Bezugsfläche (10), wobei der jeweils erfaßte Teil der Bezugsfläche auf einem Gittersystem (30) aus kammförmigen, ineinander verschachtelten fotoelektrischen Gittern abgebildet und erfaßt wird, welches mit einer Vorrichtung (37) zur Messung der Phasendifferenz zwischen einem von dem Gittersystem abgeleiteten ersten Signal und einem zweiten Signal verbunden ist, und wobei von dem Ausgangssignal der Vorrichtung (37) ein Bewegungsvektor abgeleitet wird, dadurch gekennzeichnet, daß zwei aus je vier kammförmigen Gittern (13, 31 ... 34) bestehende Gittersysteme (40, 41) vorgesehen sind, die um einen festlegbaren Winkel $2\alpha$ zueinander versetzt angeordnet sind, wobei $\alpha$ der Winkel zwischen der Symmetrieachse (45) des Sensors (42) und der Symmetrieachse (43, 44) des jeweiligen Gittersystems (40, 41) ist, daß das erste und dritte Gitter eines jeden Gittersystems mit einer ersten Subtrahierstufe (35) und das zweite und vierte Gitter eines jeden Gittersystems mit einer zweiten Subtrahierstufe (36) verbunden sind, daß je zwei mit einem Gittersystem verbundene Subtrahierstufen (35, 36) mit den Eingängen je einer Vorrichtung (37) verbunden sind und jeweils das erste bzw. zweite Signal liefern, und daß die Ausgangssignale der beiden Vorrichtungen (37) und die Frequenzen der Ausgangssignale der Subtrahierstufen (35, 36) zur Berechnung des Betrages und des Winkels des Geschwindigkeitsvektors $\vec{V}$ und des zurückgelegten Weges bei der Relativbewegung dienen.

2. Sensor für Relativbewegungen zu einer Bezugsfläche (10), wobei der jeweils erfaßte Teil der Bezugsfläche auf einem Gittersystem (30) aus kammförmigen, ineinander verschachtelten fotoelektrischen Gittern abgebildet und erfaßt wird, welches mit einer Vorrichtung (37) zur Messung der Phasendifferenz zwischen einem von dem Gittersystem abgeleiteten ersten Signal und einem zweiten Signal verbunden ist, und wobei von dem Ausgangssignal der Vorrichtung (37) ein Bewegungsvektor abgeleitet wird, dadurch gekennzeichnet, daß zwei aus je vier kammförmigen Gittern (13, 31 ... 34) bestehende Gittersysteme (51, 52) vorgesehen sind, von denen die Symmetrieachse (53) des einen Gittersystems (51) einen Winkel $\alpha_1 = 0°$ und die Symmetrieachse (54) des anderen Gittersystems (52) einen Winkel $\alpha_2 = 90°$ gegenüber der Symmetrieachse (55) des Sensors (50) aufweisen, und daß das erste und das dritte Gitter eines jeden Gittersystems mit einer ersten Subtrahierstufe (35) und das zweite und vierte Gitter eines jeden Gittersystems mit einer zweiten Subtrahierstufe (36) verbunden sind, daß je zwei mit einem Gittersystem verbundene Subtrahierstufen (35, 36) mit den Eingängen je einer Vorrichtung (37) verbunden sind und jeweils das erste bzw. zweite Signal liefern, und daß die Ausgangssignale der beiden Vorrichtungen (37) und die Frequenzen der Ausgangssignale der Subtrahierstufen (35, 36) zur Berechnung des Betrages und des Winkels des Geschwindigkeitsvektors $\vec{V}$ und des zurückgelegten Weges bei der Relativbewegung dienen.

## Claims

1. A sensor for movements relative to a reference surface (10), wherein the portion of the reference surface detected at any given time is imaged and detected on a grid system (30) which comprises comb-shaped, interlaced photoelectric grids and which is connected to a device (37) for measuring the phase difference between a first signal derived from the grid system and a second signal, and wherein a movement vector is derived from the output signal of the device (37), characterised in that there are provided two grid systems (40, 41) each comprising four comb-shaped grids (13, 31 ... 34) and which are staggered relative to one another by a determinable angle $2\alpha$, $\alpha$ being the angle between the axis of symmetry (45) of the sensor (42) and the axis of symmetry (43, 44) of the respective grid system (40, 41), that the first and third grids of each grid system are connected to a first subtraction stage (35) and the second and fourth grids of each grid system are connected to a second subtraction stage (36), that every two subtraction stages (35, 36) connected to a grid system are connected to the inputs of a respective device (37) and supply the first and second signals respectively, and that the output signals of the two devices (37) and the frequencies of the output signals of the subtraction stages (35, 36) serve to calculate the value and the angle of the velocity vector (V) and the distance covered during the relative movement.

2. A sensor for movements relative to a reference surface (10), wherein the portion of the reference surface detected at any given time is imaged and detected on a grid system (30) which comprises comb-shaped, interlaced photoelectric grids and which is connected to a device (37) for measuring the phase difference between a first signal derived from the grid system and a second signal, and wherein a movement vector is derived from the output signal of the device (37), characterised in that there are provided two grid systems (51, 52) each comprising four comb-shaped grids (13, 31 ... 34), the axis of symmetry (53) of one grid system (51) being at an angle $\alpha_1 = 0°$ relative to the axis of symmetry (55) of the sensor (50) and the axis of symmetry (54) of the other grid system (52) being at an angle $\alpha_2 = 90°$ relative to the axis of symmetry (55) of the sensor (50), and that the first and third grids of each grid system are connected to a first subtraction stage (35) and the second and fourth grids of each grid system are connected to a second subtraction stage (36), that every two subtraction stages (35, 36) connected to a grid system are connected to the inputs of a respective device (37) and supply the first and second signals respectively, and that the output signals of the two devices (37) and the frequencies of the output signals of the subtraction stages (35, 36) serve to calculate the value and the angle of the velocity vector (V) and the distance covered during the relative movement.

## Revendications

1. Capteur de mouvements relatifs par rapport à une face de référence (10), chaque partie captée de la face de référence étant reproduite et captée sur un système à grilles (30) se composant de grilles photoélectriques en forme de peigne, imbriquées les unes dans les autres, relié à un dispositif de mesure (37) pour la mesure de la différence de phase entre un premier signal dérivé du système à grilles et un deuxième signal, un vecteur de déplacement étant dérivé à partir du signal de sortie du dispositif (37), caractérisé en ce qu'il est prévu deux systèmes à grilles (40, 41), se composant chacun de quatre grilles en forme de peigne (13, 31 ... 34), disposés de manière décalée les uns par rapport aux autres d'un angle $2\alpha$ susceptible d'être déterminé, $\alpha$ étant l'angle compris entre l'axe de symétrie (45) du capteur (42) et l'axe de symétrie (43, 44) de chaque système à grilles (40, 41), et en ce que la première et la troisième grille de chaque système à grilles sont reliées à un premier étage de soustraction (35) et que la deuxième et la quatrième grille de chaque système à grilles sont reliées à un deuxième étage de soustraction (36), en ce que chaque fois deux étages de soustraction (35, 36) reliés à un système à grilles sont reliés aux entrées de chaque dispositif (37) et délivrent chaque fois le premier et le deuxième signal, et en ce que les signaux de sortie des deux dispositifs (37) et les fréquences des signaux de sortie des étages de soustraction (35, 36) servent au calcul de la valeur et de l'angle du vecteur de vitesse (V) et du chemin parcouru lors du déplacement relatif.

2. Capteur de mouvements relatifs par rapport à une face de référence (10), chaque partie captée de la face de référence étant reproduite et captée sur un système à grilles (30) se composant de grilles photoélectriques en forme de peigne, imbriquées les unes dans les autres, relié à un dispositif de mesure (37) pour la mesure de la différence de phase entre un premier signal dérivé du système à grilles et un deuxième signal, un vecteur de déplacement étant dérivé à partir du signal de sortie du dispositif (37), caractérisé en ce qu'il est prévu deux systèmes à grilles (51, 52), se composant chacun de quatre grilles en forme de peigne (13, 31 ... 34), et dont l'axe de symétrie (53) de l'un des systèmes à grilles (51) fait un angle $\alpha_1 = 0°$ par rapport à l'axe de symétrie (55) du capteur (50) et dont l'axe de symétrie (54) de l'autre système à grilles (52) fait un angle $\alpha_2 = 90°$ par rapport à l'axe de symétrie (55) du capteur (50), et en ce que la première et la troisième grille de chaque système à grilles sont reliées à un premier étage de soustraction (35) et que la deuxième et la quatrième grille de chaque système à grilles sont reliées à un deuxième étage de soustraction (36), en ce que chaque fois deux étages de soustraction (35, 36) reliés à un système à grilles sont reliés aux entrées de chaque dispositif (37) et délivrent chaque fois le premier et le deuxième signal, et en ce que les signaux de sortie des deux dispositifs (37) et les fréquences des signaux de sortie des étages de soustraction (35, 36) servent au calcul de la valeur et de l'angle du vecteur de vitesse (V) et du chemin parcouru lors du déplacement relatif.

Fig. 1

Fig. 2

Fig. 3

Fig. 4

Fig. 5